Europäisches Patentamt

European Patent Office

Office européen des brevets

(11) Publication number: **0 436 019 A1**

# EUROPEAN PATENT APPLICATION
## published in accordance with Art. 158(3) EPC

(21) Application number: 88907368.0

(51) Int. Cl.5: **G05B 19/04**

(22) Date of filing: **18.08.88**

(86) International application number:
**PCT/JP88/00821**

(87) International publication number:
**WO 89/02100 (09.03.89 89/06)**

(30) Priority: **27.08.87 JP 213717/87**

(43) Date of publication of application:
**10.07.91 Bulletin 91/28**

(84) Designated Contracting States:
**DE FR GB**

(71) Applicant: **FANUC LTD.**
**3580, Shibokusa Aza-Komanba, Oshino-mura**
**Minamitsuru-gun, Yamanashi 401-05(JP)**

(72) Inventor: **TANAKA, Kunio**
**5-8-13, Tamagawamachi**
**Akishima-shi Tokyo 196(JP)**
Inventor: **MAEDA, Kimio**
**52-2-103, Matsugatani**
**Hachioji-shi Tokyo 192-03(JP)**
Inventor: **SAIKI, Yoshiharu Fanuc Dai-3**
**Vira-karamatsu**
**3527-1, Shibokusa Oshinomura**
**Minamitsuru-gun Yamanashi 401-05(JP)**

(74) Representative: **Brunner, Michael John et al**
**GILL JENNINGS & EVERY 53-64 Chancery Lane**
**London WC2A 1HN(GB)**

(54) **SIGNAL TRACE CONTROL SYSTEM FOR PMC.**

(57) A signal trace control system for tracing and storing particular signals in a programmable machine controller (PMC). Designated trace signals are supervised by a supervising means (21) which collects them in one place (R510), and trace signals are written in a trace buffer (2) by a write control means (22) in response to trace control signals from the supervising means (21). Since signals to be traced are collected in one place, there is realized a signal trace control system having a short tracing time.

Fig. 1

## SIGNAL TRACE CONTROL SYSTEM FOR PMC

### TECHNICAL FIELD

The present invention relates to a signal trace control system for a PMC (programmable machine controller), and more specifically, to a signal trace system for a PMC for gathering trace signals to be traced at one location.

### BACKGROUND ART

When a PMC device is developed or maintenance of a PMC device is carried out, a signal from each part thereof must be found to determine the cause of a fault of the device. This signal is displayed on a display unit of the PMC device or a display unit of a numerical control apparatus (CNC) connected to the PMC device, but it is difficult to interpret this signal on the display unit when the signal changes at a high speed or is produced at lengthy intermittent intervals, and thus this signal must be stored in a memory and reproduced when required. This is particularly necessary when a dynamic state of the signal, i.e., a process of change rather than a static state thereof is important. A method of changing a program of a control unit and monitoring particular signals has been used to determine this state, but if the program of the control unit is stored in a ROM then this program cannot be changed.

Further, in another known method of monitoring a state of signals, the signals are sequentially stored in a memory for a certain period of time. This method traces the signals, stores them in another memory, and reproduces them as required, but merely tracing the signals and storing them in a memory requires an increased memory capacity.

Japanese Patent Application 61-086918 discloses a trace control method by which the memory capacity is not increased, wherein a change in a signal to be traced is recognized and the same byte or word as the signal is traced.

The conventional trace system, however, has a problem in that, since the signals to be traced usually are not at one location but are at different locations, a long time is required to trace these signals. In particular, the trace must be processed at the highest possible level in sequence programs, and when such a trace is effected at a high level for a long time, the processing of other sequence programs is adversely affected.

### DISCLOSURE OF THE INVENTION

An object of the present invention is to solve the above problem and to provide a signal trace control system for a PMC for gathering trace signals to be traced at one location.

To solve the above problem, in accordance with the present invention, there is provided a signal trace control system for a PMC (programmable machine controller) for tracing designated signals and storing those signals in the PMC, comprising:

a RAM for storing a sequence program;

a means for adding a dummy ladder for gathering the designated trace signals at one location;

a monitor means for monitoring the designated trace signals gathered at one location; and

a writing control means for writing the designated trace signals to a trace buffer in response to a trace control signal from the monitor means.

Accordingly, signals to be traced are gathered at one location, e.g., in one byte, by a dummy command, and the trace is effected by writing the signals for the one byte as they are, whereby the tracing time is shortened.

### BRIEF DESCRIPTION OF THE DRAWINGS

FIG. 1 is a block diagram of an embodiment of the present invention;

FIG. 2 is a diagram of a dummy ladder for gathering signals to be traced; and

FIG. 3 is a block diagram of a hardware as an embodiment of the present invention.

### BEST MODE FOR CARRYING OUT THE INVENTION

An embodiment of the present invention will be hereinafter described in detail with reference to the drawings.

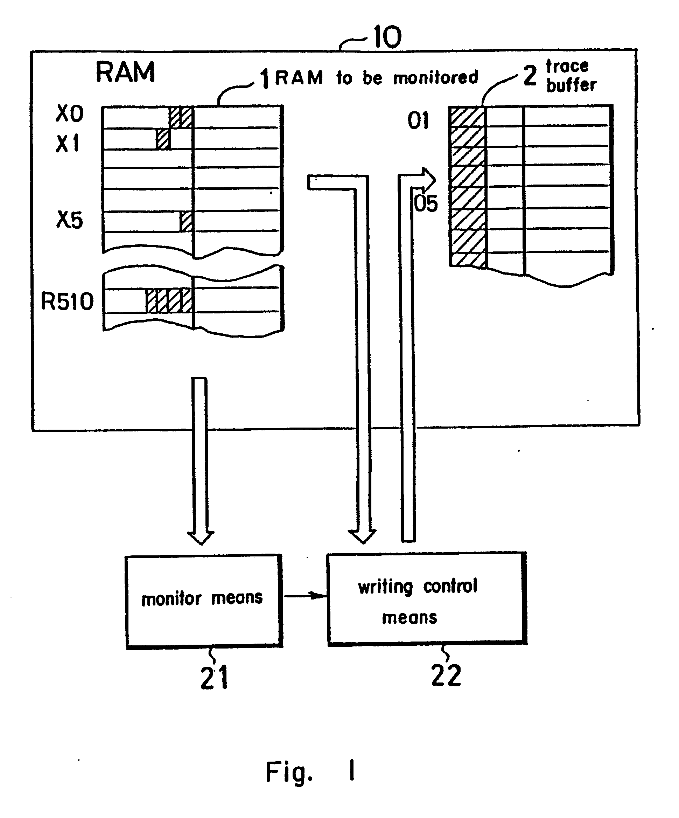

FIG. 1 is a block diagram of an embodiment of the present invention, wherein 10 designates a RAM in a PMC for storing various signals, the state of which is subject to continuous change.

Here the four signals shown by hatching in FIG. 1 are exemplified as the signals to be traced. Namely, the four signals to be traced are

X 0.0
X 0.1
X 1.2
X 5.0

gathered at an address R510 by a dummy command and then traced as described later in detail.

Designated at 2 is a trace buffer to which the signals at the address R510 are written and stored; designated at 21 is a monitor means for monitoring a conditional signal of the RAM to be monitored; and designated at 22 is a writing control means for writing data of the trace signals to the trace buffer 2 in response to a signal from the monitor means 21.

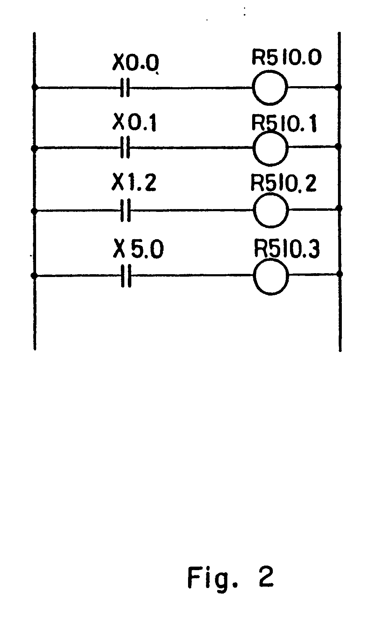

Next, the method for gathering the signals to be traced at the address R510 is explained. FIG. 2 is a diagram of a dummy ladder used for gathering the signals to be traced. A ladder command is added in which the signals to be traced are used as contact points and coils of the address R510 are operated at the contact points, and as a result, a signal identical to each trace signal can be written to the address R510. Accordingly, trace can be effected by one trace operation of reading the address R510 and writing the data thereof into the trace buffer 2.

In addition, since the trace is effected only when a change occurs in the signals to be traced, any change in the signals to be traced is detected by the monitor means 21 upon receipt of XORs of the present and next addresses R510.

The ladder command is automatically added to a RAM in which a sequence program is stored when the signals to be traced are specified, and is processed by controlling a management program for this sequence program.

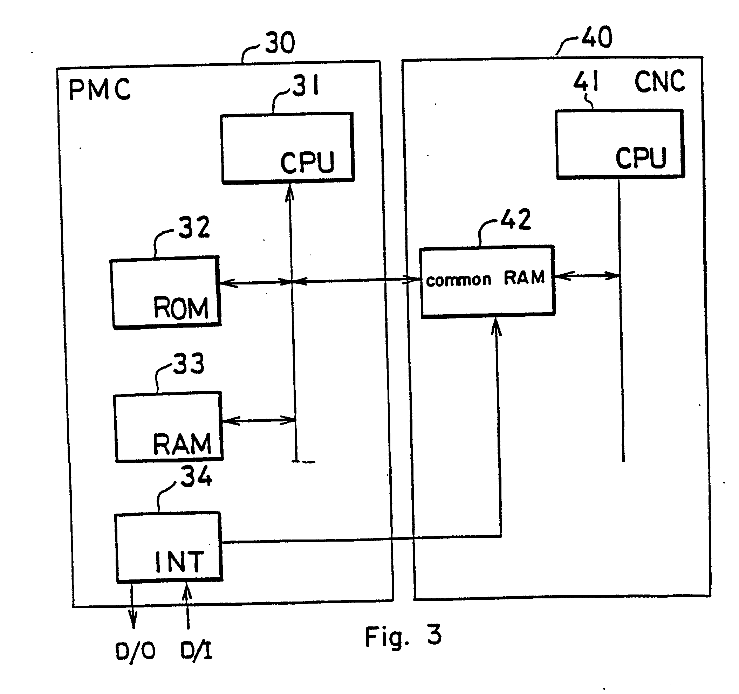

Next, an arrangement of hardware as an embodiment of the present invention will be described. FIG. 3 is a block diagram of the hardware as the embodiment of the present invention, wherein 30 designates a PMC (programmable machine controller) provided with a CPU 31, a ROM 32, a RAM 33, and an external interface (INT) 34. The ROM 32 stores the management program for the PMC, and the like. The RAM 33 corresponds to the RAM 10 shown in FIG. 1, and includes the RAM 1 to be monitored and the trace buffer 2 in FIG. 1. A sequence program for controlling a machine is also stored in the RAM 33, to automatically write the dummy ladder signal for gathering the signals to be traced at one location.

The interface 34 receives an input (DI) from and applies an output (DO) to a machine side, and a part of the input and the output is directly applied to a CNC. The CPU 31, the ROM 32 and the RAM 33 are interconnected through a bus. Designated at 40 is the CNC (numerical control apparatus). Note only a CPU 41 and a common RAM 42 thereof are shown in FIG. 3.

The PMC 30 and the CNC 40 interexchange data through the common RAM 42. Further, the input (DI) from and the output (DO) to the machine side are once applied to the common RAM 42 and transmitted to the PMC 30 and the CNC 40, respectively.

The monitoring of the conditional signal, logic state checks, and writing of the trace signals shown in this embodiment are controlled by the CPU 31.

In the above embodiment, the PMC device when used with the numerical control apparatus is described, but the present invention also can be applied to a PMC device alone.

As described above, according to the present invention, since the signals to be traced are gathered at one location by a dummy ladder command, a trace can be effected in a short time.

## Claims

1. A signal trace control system for a PMC (programmable machine controller) for tracing designated signals and storing said signals in the PMC, comprising:
a RAM for storing a sequence program;
a means for adding a dummy ladder for gathering said designated trace signals at one location;
a monitor means for monitoring said designated trace signals gathered at one location; and
a writing control means for writing said designated trace signals to a trace buffer in response to a trace control signal from said monitor means.

2. A signal trace control system according to claim 1, wherein said monitor means effects a trace of said designated signals only when a change occurs in said designated signals to be traced.

Fig. 1

Fig. 2

Fig. 3

EP 0 436 019 A1

# INTERNATIONAL SEARCH REPORT

International Application No PCT/JP88/00821

**I. CLASSIFICATION OF SUBJECT MATTER (If several classification symbols apply, indicate all)**

According to International Patent Classification (IPC) or to both National Classification and IPC

Int.Cl⁴   G05B19/04

**II. FIELDS SEARCHED**

| Minimum Documentation Searched⁷ | |
| --- | --- |
| Classification System | Classification Symbols |
| IPC | G05B19/04 |

Documentation Searched other than Minimum Documentation
to the Extent that such Documents are Included in the Fields Searched⁸

| | |
| --- | --- |
| Jitsuyo Shinan Koho | 1932 - 1988 |
| Kokai Jitsuyo Shinan Koho | 1971 - 1988 |

**III. DOCUMENTS CONSIDERED TO BE RELEVANT⁹**

| Category* | Citation of Document,¹¹ with indication, where appropriate, of the relevant passages¹² | Relevant to Claim No.¹³ |
| --- | --- | --- |
| X | JP, A, 61-21507 (Omron Tateisi Electronics Co.) 30 January 1986 (30. 01. 86) (Family: none) | 1-2 |
| X | JP, A, 60-229117 (Omron Tateisi Electronics Co.) 14 November 1985 (14. 11. 85) (Family: none) | 1-2 |
| Y | JP, A, 60-218117 (Fuji Electric Co., Ltd., Fuji Facom Seigyo Kabushiki Kaisha) 31 October 1985 (31. 10. 85) (Family: none) | 1-2 |
| Y | JP, A, 60-159911 (Yokogawa Hokushin Electric Corporation) 21 August 1985 (21. 08. 85) (Family: none) | 1-2 |

* Special categories of cited documents:¹⁰

"A" document defining the general state of the art which is not considered to be of particular relevance.

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
| --- | --- |
| October 31, 1988 (31. 10. 88) | November 14, 1988 (14. 11. 88) |
| International Searching Authority | Signature of Authorized Officer |
| Japanese Patent Office | |

Form PCT/ISA/210 (second sheet) (January 1985)